# EUROPÄISCHE PATENTANMELDUNG

(11) **EP 0 940 241 A2**
(43) Veröffentlichungstag der Anmeldung: **08.09.1999**
(21) Anmeldenummer: 99104141.9
(22) Anmeldetag: 02.03.1999
(51) Int. Cl.: B29C 45/13, B29C 45/17, E05B 9/00, E05B 65/20

(54) **Verfahren zur Herstellung eines Grundelementes mit einstückig daran ausgebildeter Dichtung sowie derart hergestelltes Schlossgehäuse**

(30) Priorität: 02.03.1998 DE 19808476
(71) Anmelder: Schneegans GmbH, D-46446 Emmerich (DE)
(72) Erfinder: Schneegans, Dieter, 46446 Emmerich (DE)
(74) Vertreter: KEIL & SCHAAFHAUSEN Patentanwälte

(57) **Zusammenfassung**

Es wird ein Verfahren zur Herstellung eines Grundelementes (1,1') insbesondere eines Schloßgehäuses mit einer einstückig daran ausgebildeten Dichtung (2) beschrieben, wobei das Grundelement (1,1') insbesondere durch Spritzgießen aus einem thermoplastischen Material hergestellt wird, wobei eine Dichtung (2) aus Elastomer-, Gummi-, Kautschuk-, thermoplastischem Elastomer (TPE)- oder Silikonmaterial an das Grundelement (1,1') anvulkanisiert wird und wobei in der Dichtung (2) wenigstens ein geschlossener Hohlraum (5) ausgebildet wird.

## Beschreibung

Die Erfindung betrifft ein Verfahren zur Herstellung eines Grundelementes, insbesondere eines Schloßgehäuses, mit einer einstückig daran ausgebildeten Dichtung sowie ein entsprechend hergestelltes Schloßgehäuse.

Im Automobilbau werden zur Abdichtung der Türschloßgehäuse gegen das Eindringen von Feuchtigkeit oder Schmutz von außen Dichtungen aus Gummi- oder Elastomermaterial eingesetzt, die an das Türschloßgehäuse aus Kunststoff angespritzt werden und einen Steg als Dichtlippe aufweisen. Dies ist bspw. aus der DE 41 03 142 A1 bekannt. In der Fahrzeugkarosserie können aber Spalten von bis zu 3 mm auftreten, die durch derartige, fest an Standardteilen befestigte Dichtungen nur schwer aufgenommen werden können. Auch unterliegt die Dichtlippe einem hohen Verschleiß.

Es sind ferner Dichtungen bekannt, in denen ein Hohlraum ausgebildet ist, dessen Querschnitt beim Zusammendrücken des elastischen Dichtungsmaterials verringert wird und daher größere Toleranzen aufnehmen kann. Derartige Dichtungen werden bspw. zur Abdichtung des Kofferraums verwendet, wobei die Abdichtung beim Zusammenpressen der Dichtung durch den Kofferraumdeckel erzielt wird und aufgrund der Elastizität der Dichtung größere Toleranzen aufgenommen werden. Diese Dichtungen werden ublicherweise im Extrusionsverfahren als Meterware hergestellt und dann entsprechend den Anforderungen abgelängt. Abgesehen davon, dass sich durch die separate Anbringung, eventuell einschließlich Kleben, der Dichtung der Montageaufwand erhöht und die Teile auch auseinanderfallen können (geringe Prozessicherheit), ergibt sich hierbei auch das Problem, dass der Hohlraum der Dichtung an den Schnittstellen offen ist und dass die Dichtung selbst nicht vollkommen umläuft, sondern an dem Stoßpunkt der beiden zusammengeführten Enden einen Freiraum aufweist. So können Flüssigkeit oder Schmutz eintreten. Während dies beim Kofferraum noch tolerabel sein mag, kann das Eintreten von Flüssigkeit oder Schmutz in das Türschloßgehäuse die Funktion des Türschlosses beeinträchtigen.

Hiervon ausgehend ist es Aufgabe der vorliegenden Erfindung, eine zuverlässige Verbindung zwischen der Dichtung und einem Grundelement, insbesondere einem Schloßgehäuse, und gleichzeitig eine zuverlässig Dichtwirkung zu erreichen.

Diese Aufgabe wird mit der Erfindung im wesentlichen dadurch gelöst, dass das Grundelement insbesondere durch Spritzgießen aus einem Kunststoffmaterial hergestellt wird, dass eine vorzugsweise umlaufende Dichtung aus Elastomer-, Gummi-, Kautschuk-, thermoplastischem Elastomer (TPE)- oder Silikonmaterial an das Grundelement anvulkanisiert und/oder formschlüssig verbunden und dass in der umlaufenden Dichtung wenigstens ein geschlossener Hohlraum ausgebildet wird.

Gemäß einer bevorzugten Ausgestaltung der Erfindung wird zur Herstellung der Dichtung eine festgelegte Menge des Dichtungsmaterials in flüssiger oder plastischer Form und ein unter Druck stehendes Gas in eine wenigstens teilweise von einer Verbindungsfläche des Grundelements begrenzte Kavität einer Gießform eingebracht, um wenigstens einen Teil des Dichtungsmaterials gegen die Wandung der Gießform bzw. die Verbindungsfläche des Grundelements zu verdrängen und einen Hohlraum in der Dichtung auszubilden. Anschließend wird das Dichtungsmaterial abgekühlt, und das Grundelement kann mit der anvulkanisierten Dichtung aus der Gießform entnommen werden.

Die Erfindung setzt zum einen das sogenannte "Zwei-Komponenten-Verfahren" ein, bei dem in einer Form ein Thermoplast für die Herstellung des Grundelementes, insbesondere des Schloßgehäuses, und ein Elastomer zur Herstellung der Dichtung verarbeitet werden. Nach Spritzen des Grundelementes wird das Dichtungsmaterial an die Verbindungsfläche des Grundelementes angespritzt und anvulkanisiert, wodurch eine chemische Verbindung zwischen dem Grundelement und dem Dichtungsmaterial hergestellt wird.

Neben dieser zuverlässigen Verbindung zwischen den Materialien wird durch das "Aufblasen" des Dichtungsmaterials von innen heraus ein geschlossener Hohlraum geschaffen, in den kein Schmutz oder Flüssigkeit eintreten kann. Die Erfindung macht sich hierbei einen Gedanken zu Nutze, der vor allem aus der Verarbeitung von Hartkunststoffen (Thermoplasten) bereits grundsätzlich bekannt ist. Bei dem sogenannten "Gasinnendruckverfahren", wie es bspw. aus der US-A 5,098,637 oder der EP-A 0 704 291 bekannt ist, wird ebenfalls Gas in eine Gießform injiziert, in die zuvor ein thermoplastisches Material eingebracht wurde, wobei das flüssige thermoplastische Material nach außen gegen die Wandung der Gießform gepreßt wird und damit einen Hohlraum bildet. Hierdurch soll vor allen Dingen Material eingespart werden. Bei der erfindungsgemäßen Anwendung dieses Verfahrens ist allerdings die Materialeinsparung von untergeordneter Bedeutung. Der Hohlraum soll vielmehr die Elastizität des Materials erhöhen und damit die Dichtwirkung auch bei Verschiebungen der Einzelteile verbessern.

Gemäß einer bevorzugten Ausgestaltung der Erfindung wird das heiße Dichtungsmaterial in einer gekühlte Form eingespritzt, um die Verarbeitungszeit zu verringern und das Abkühlen des Materials an den Formwandungen zu verbessern. Dieses Verfahren eignet sich besonders für die Verarbeitung thermoplastischer Elastomere oder reiner Thermoplaste.

Bei vernetzbaren Materialien, wie Gummi oder Kautschuk, ist es dagegen empfehlenswert, das heiße Material in eine erwärmte Form einzuspritzen, da das Material zum Vernetzen und Vulkanisieren warm bleiben sollte.

Erfindungsgemäß ist weiterhin vorgesehen, dass der Gasdruck erst nach Abkühlen des Dichtungsmaterials in der Form abgesenkt wird, um zu gewährleisten, dass die Dichtung in der gewünschten Form erstarrt.

Bei einer besonders bevorzugten Ausführungsform ist vorgesehen, dass die Temperatur der Form und/oder der Druck des eingebrachten Gases in Abhängigkeit von dem bearbeiteten Dichtungsmaterial entsprechend vorher festgelegten Kurven gesteuert wird. Gerade bei vernetzbaren Materialien ist zum Erzielen einer ausreichenden Vulkanisation die Steuerung des Temperatur- und Druckverlaufes von großer Bedeutung. So kann vorgesehen sein, den Druck während des Vulkanisiervorganges abzusenken.

In Weiterbildung der Erfindung wird die Wandstärke und damit die Elastizität der Dichtung durch die Regelung des Druckes des eingebrachten Gases eingestellt.

Bei einer anderen Ausgestaltung der Erfindung wird als Dichtungsmaterial ein aufschäumbares Elastomer-, Gummi-, Kautschuk-, thermoplastisches Elastomer (TPE)- oder Silikonmaterial verwendet, das bei oder nach dem Einbringen in eine wenigstens teilweise von einer Verbindungsfläche des Grundelementes begrenzte Gießform aufgeschäumt wird. Anstelle des mittels des oben beschriebenen Gasinnendruckverfahrens hergestellten einzelnen geschlossenen Hohlraums in der Dichtung wird bei dieser weiteren Ausführungsform der Erfindung durch das Aufschäumen eine Vielzahl von Hohlräumen in dem Dichtungsmaterial ausgebildet, durch die die Elastizität der Dichtung erhöht wird. Hierdurch kann insbesondere der Nachteil des Gasinnendruckverfahrens vermieden werden, dass sich eine gleichmäßige Wandstärke der Dichtung nur schwer gewährleitsten lässt. Beim Aufschäumen wird dagegen relativ einfach eine gleichmäßige Elastizität über die gesamte Dichtung erreicht.

Die Erfindung erstreckt sich auch auf ein gemäß den oben beschriebenen Verfahren hergestelltes Schloßgehäuse mit einem Grundelement aus Kunststoffmaterial, in dem Befestigungs- und Lagerbohrungen für Schloßteile und eine Ausnehmung für einen Schließbügel ausgebildet sind, und mit einer einstückig mit dem Grundelement ausgebildeten vorzugsweise umlaufenden Dichtung, wobei die Dichtung an das Grundelement anvulkanisiert ist und wenigstens einen geschlossenen Hohlraum aufweist.

Das Dichtungsmaterial ist hierbei vorzugsweise aufschäumbar; insbesondere hat sich die Verwendung eines aufschäumbaren Elastomer-, Gummi-, Kautschuk-, thermoplastischen Elastomer (TPE)- oder Silikonmaterials bewährt.

Die Dichtung kann aber auch aus einem eine Kombination von thermoplastischen und reinen Elastomeren aufweisenden Material bestehen.

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:

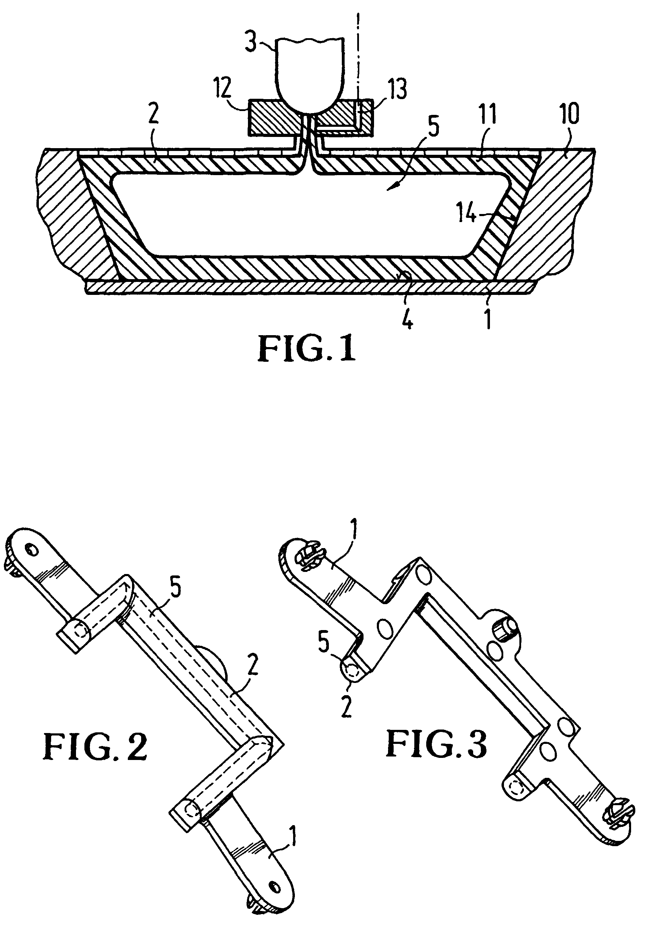

- Fig. 1: einen schematischen Teilschnitt durch eine Spritzgußvorrichtung zur Durchführung des erfindungsgemäßen Verfahrens,
- Fig. 2: eine perspektivische Ansicht von oben auf eine an einem Grundelement angebrachte Dichtung,
- Fig. 3: eine perspektivische Ansicht von unten auf das Grundelement mit Dichtung gemäß Fig. 2,
- Fig. 4: eine Ansicht eines Schloßgehäuses, und
- Fig. 5: eine Draufsicht auf das Schloßgehäuse gemäß Fig. 4.

Eine Vorrichtung zur Herstellung eines Grundelementes 1, insbesondere eines Schloßgehäuses, mit einer einstückig daran ausgebildeten Dichtung 2 aus Elastomer-, Gummi-, Kautschuk-, thermoplastischem Elastomer (TPE)- oder Silikonmaterial (nachfolgend kurz Dichtungsmaterial 3) weist eine bspw. als Drehform ausgebildete Gießform 10 auf, wobei in einer ersten Station ein Kunststoff, insbesondere ein Thermoplast, zur Bildung des Grundelementes 1 eingespritzt wird. Anschließend wird der Innenteil der Gießform 10 mit dem Grundelement 1 gedreht. In einer zweiten Station wird eine festgelegte Menge an geschmolzenem Dichtungsmaterial 3 über eine Injektionsdüse 12 in eine einseitig von einer Verbindungsfläche 4 des Grundelements 1 begrenzte Kavität 11 eingespritzt. Die Materialmenge ist hierbei vorzugsweise geringer als eine Menge, die die Kavität 11 vollständig füllen würde.

In der Injektionsdüse 12 ist außerdem ein Gasdurchgang 13 für die Zufuhr von unter Druck stehendem Gas vorgesehen. Der Gießform 10 können ferner in bekannter, hier nicht dargestellter Weise Überlaufgefäße zugeordnet sein, in die überschüssiges Dichtungsmaterial austreten kann. Durch den Gasdurchgang 13 wird unter Druck stehendes Gas in die Gießform 10 eingebracht, wobei der Injektionsvorgang des Dichtungsmaterials noch nicht vollständig abgeschlossen sein muß. Der Gasdruck in der Gießform 10 wird solange aufrecht erhalten, bis eine festgelegte Materialmenge in das/die Überlaufgefäß(e) ausgetreten ist. Hierbei neigt das Gas dazu, das heißeste Dichtungsmaterial mit der höchsten Viskosität im mittleren Bereich der Kavität 11 zu verdrängen und gegen die Wandung 14 der Gießform 10 bzw. die Verbindungsfläche 4 des Grundelements 1 zu pressen. Dementsprechend wird in der Dichtung 2 ein Hohlraum 5 ausgebildet. Gleichzeitig erfolgt ein Anvulkanisieren des Dichtungsmaterials an die die Kavität 11 für die Dichtung 2 begrenzende Verbindungsfläche 4 des Grundelements 1. Hierdurch wird eine chemische Verbindung zwischen dem Grundelement 1 und der Dichtung 2 erzielt. Weitere mechanische platzaufwendige Verbindungen zwischen den Elementen können entfallen. Da das Dichtungsmaterial bei einer Temperatur von etwa 150 bis 170° C vulkanisiert wird, erfolgt die Bearbeitung auch des Thermoplasts für das Grundelement 1 vorzugsweise bei dieser Temperatur. Nach Abkühlen des Dichtungsmaterials kann die Gießform 10 geöffnet und das Grundelement 1 mit der daran ausgebildeten Dichtung 2 entnommen werden.

Die Gießform 10 kann beim Einspritzen des Dichtungsmaterials gekühlt sein, was insbesondere bei thermoplastischen Elastomermaterialien empfehlenswert ist. Bei vernetzbaren Materialien, insbesondere Gummi oder Kautschuk empfiehlt es sich dagegen, die Wandung 14 der Gießform 10 zu erwarmen, um den Vulkanisationsvorgang zu unterstützen. Von besonderem Vorteil kann es hierbei sein, die Temperatur der Form und/oder den Druck des eingebrachten Gases entlang vorher festgelegter, bspw. empirisch ermittelter Kurven zu steuern. Diese Regelung erfolgt selbstverständlich materialabhängig.

Die Wandstärke der Dichtung 2 wird über den aufgebrachten Gasdruck geregelt. Überschüssiges Material wird in die Überlaufgefäße verdrängt. Die Wandstärke beeinflußt hierbei unmittelbar die Elastizität der Dichtung 2.

Gemäß einer anderen Ausgestaltung der Erfindung wird als Dichtungsmaterial ein aufschäumbares Elastomer-, Gummi-, Kautschuk-, thermoplastisches Elastomer (TPE)- oder Silikonmaterial verwendet. Dieses wird ebenfalls nach den oben beschriebenen Zwei-Komponenten-Verfahren an das Grundelement 1 aus thermoplastischem Material angespritzt und anvulkanisiert. Anstelle des Aufblasens des Dichtungsmaterials zur Erzielung des Hohlraums 5 wird bei dieser Ausführungsform aber das Dichtungsmaterial aufgeschäumt, so dass sich eine Vielzahl von kleinen Hohlräumen in der Dichtung 2 ausbildet, die ebenso wie der durch das Gasinnendruckverfahren hergestellte Hohlraum eine ausreichende Elastizität der Dichtung und damit zuverlässige Dichtwirkung auch bei größeren Toleranzbereichen gewährleistet.

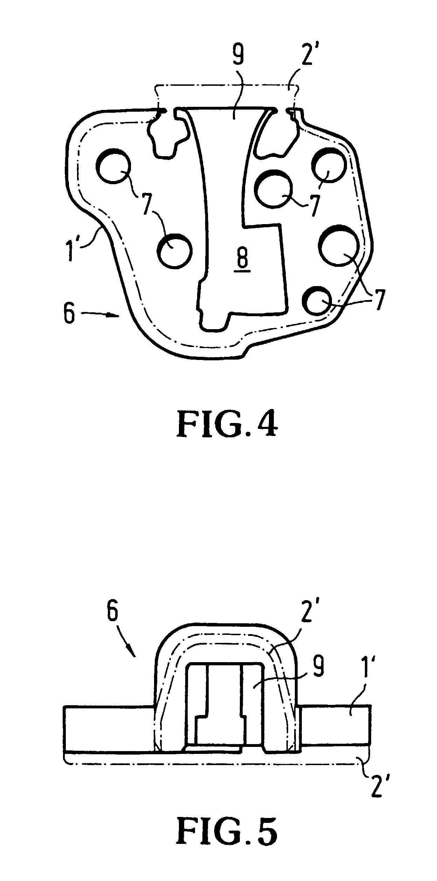

Das erfindungsgemäße Verfahren läßt sich vor allem für kleinere Teile vorteilhaft einsetzen. Ein bevorzugtes Anwendungsfeld derartiger Dichtungen 2 ist die Verwendung als Türschloßdichtung im Automobilbau. Hierbei kann, wie in den Fig. 2 und 3 dargestellt ist, die Dichtung 2 lediglich im Kontaktbereich des Grundelementes 1 vorgesehen sein. Da die erfindungsgemäß hergestellte Dichtung 2 einen geschlossenen Hohlraum 3 aufweist, besteht keine Gefahr des Eintretens von Schmutz oder Feuchtigkeit, so dass eine zuverlässige Abdichtung gewährleistet ist.

Bei der in den Fig. 4 und 5 gezeigten Ausführungsform weist ein Grundelement 1' eines Schloßgehäuses 6 mehrere Befestigungs- und Lagerbohrungen 7 für nicht dargestellte Schloßteile und eine Ausnehmung 8 mit einer Eintrittsöffnung 9 für einen Schließbügel auf. Die Dichtung 2' kann hierbei auch um das gesamte Schloßgehäuse 6 umlaufen, um eine vollständige Abdichtung des Schloßgehäuses 6 nicht nur im Bereich der Eintrittsöffnung 9 für den Schließzylinder zu gewährleisten. Der oder die Hohlräume 5 sind auch hier vorzugsweise im gesamten Kontaktbereich der Dichtung 2' vorgesehen, um eine ausreichende Dichtwirkung zu gewährleisten.

Durch die erfindungsgemäße Herstellung im Zwei-Komponenten-Verfahren wird eine höhere Prozesssicherheit gewährleistet, da das Grundelement 1 und die Dichtung 2 nicht auseinanderfallen können. Harte und weiche Kunststoffe werden in einem Schritt verarbeitet, so dass es keinen Schwund beim Entnehmen der Elemente aus der Form und keine Meßfehler gibt. Grundelement und Dichtung können nicht mehr auseinanderfallen, so dass die Montage im Kraftfahrzeug erleichtert wird. Gleichzeitig wird durch die Kombination des Zwei-Komponenten-Verfahrens mit dem Einbringen eines geschlossenen Hohlraums in die Dichtung eine zuverlässige Dichtwirkung auch bei größeren Spalten, wie sie im Karosseriebereich auftreten können, gewährleistet.

### Bezugszeichenliste:

- 1, 1': Grundelement
- 2, 2': Dichtung
- 3: Dichtungsmaterial
- 4: Verbindungsfläche
- 5: Hohlraum
- 6: Schloßgehäuse
- 7: Befestigungs- und Lagerbohrung
- 8: Ausnehmung
- 9: Eintrittsöffnung
- 10: Gießform
- 11: Kavität
- 12: Injektionsdüse
- 13: Gasdurchgang
- 14: Wandung

## Patentansprüche

1. Verfahren zur Herstellung eines Grundelementes (1, 1'), insbesondere eines Schloßgehäuses, mit einer einstückig daran ausgebildeten Dichtung (2, 2'), wobei das Grundelement (1, 1') insbesondere durch Spritzgießen aus einem Kunststoffmaterial hergestellt wird, wobei eine vorzugsweise umlaufende Dichtung (2) aus Elastomer-, Gummi-, Kautschuk-, thermoplastischem Elastomer (TPE)- oder Silikonmaterial (3) an das Grundelement (1, 1') anvulkanisiert wird und wobei in der Dichtung (2, 2') wenigstens ein geschlossener Hohlraum (5) ausgebildet wird.

2. Verfahren nach Anspruch 1, **dadurch gekennzeichnet**, dass eine festgelegte Menge des Dichtungsmaterials (3) in flüssiger oder plastischer Form in eine wenigstens teilweise von einer Verbindungsfläche (4) des Grundelements (1, 1') begrenzte Kavität (11) einer Gießform (10) eingebracht, insbesondere eingespritzt wird, dass ein unter Druck stehendes Gas in die Gießform (10) eingebracht wird, um wenigstens einen Teil des Dichtungsmaterials (3) gegen die Wandung (14) der Gießform (10) bzw. die Verbindungsfläche (4) des Grundelements (1, 1') zu verdrängen und einen Hohlraum (5) in der Dichtung (2, 2') auszubilden, dass das Dichtungsmaterial (3) abgekühlt wird und dass das Grundelement (1, 1') mit der Dichtung (2, 2') aus der Gießform entnommen wird.

3. Verfahren nach Anspruch 2, **dadurch gekennzeichnet**, dass die Gießform (10) beim Einspritzen des Dichtungsmaterials gekühlt wird.

4. Verfahren nach Anspruch 2, **dadurch gekennzeichnet**, dass die Gießform (10) beim Einspritzen des Dichtungsmaterials erwärmt wird.

5. Verfahren nach einem der Ansprüche 2 bis 4, **dadurch gekennzeichnet**, dass der Gasdruck in der Gießform (10) erst nach Abkühlen des Dichtungsmaterials abgesenkt wird.

6. Verfahren nach einem der Ansprüche 2 bis 5, **dadurch gekennzeichnet**, dass die Temperatur der Gießform (10) und/oder der Druck des eingebrachten Gases in Abhängigkeit von dem bearbeiteten Dichtungsmaterial (3) entsprechend vorher festgelegter Kurven gesteuert wird.

7. Verfahren nach einem der Ansprüche 2 bis 6, **dadurch gekennzeichnet**, dass die Wandstärke der Dichtung (2, 2') durch eine Regelung des Gasinnendrucks eingestellt wird.

8. Verfahren nach Anspruch 1, **dadurch gekennzeichnet**, dass als Dichtungsmaterial (3) ein aufschäumbares Elastomer-, Gummi-, Kautschuk-, thermoplastisches Elastomer (TPE)- oder Silikonmaterial verwendet wird, und dass das Dichtungsmaterial (3) bei oder nach dem Einbringen in eine wenigstens teilweise von einer Verbindungsfläche (4) des Grundelementes (1, 1') begrenzte Gießform (10) aufgeschäumt wird.

9. Schloßgehäuse mit einem Grundelement (1) aus Kunststoffmaterial, in dem Befestigungs- und Lagerbohrungen (7) für Schloßteile und eine Ausnehmung (8) für einen Schließzylinder ausgebildet sind, und einer einstückig mit dem Grundelement (1) ausgebildeten vorzugsweise umlaufenden Dichtung (2'), **dadurch gekennzeichnet**, dass die Dichtung (2') an das Grundelement (1) anvulkanisiert ist und wenigstens einen geschlossenen Hohlraum (5) aufweist.

10. Schloßgehäuse nach Anspruch 9, **dadurch gekennzeichnet**, dass die Dichtung (2') aus einem aufschäumbaren Material, insbesondere einem aufschäumbaren Elastomer-, Gummi-, Kautschuk-, thermoplastischen Elastomer (TPE)- oder Silikonmaterial besteht.

11. Schloßgehäuse nach Anspruch 9 oder 10, **dadurch gekennzeichnet**, dass die Dichtung (2') aus einem eine Kombination von thermoplastischen und reinen Elastomeren aufweisenden Material besteht.
